Europäisches Patentamt

European Patent Office

Office européen des brevets

(11) Publication number: **0 211 120 B1**

(12) **EUROPEAN PATENT SPECIFICATION**

(45) Date of publication of patent specification: **15.07.92**     (51) Int. Cl.[5]: **H01L 33/00,** H01L 31/02

(21) Application number: **85305634.9**

(22) Date of filing: **08.08.85**

(54) **Improvements relating to the manufacture of optical devices.**

(43) Date of publication of application:
**25.02.87 Bulletin  87/09**

(45) Publication of the grant of the patent:
**15.07.92 Bulletin  92/29**

(84) Designated Contracting States:
**AT BE CH DE FR IT LI LU NL SE**

(56) References cited:
**DE-A- 2 613 885      DE-A- 2 903 587**
**FR-A- 2 494 910      GB-A- 2 156 972**
**US-A- 4 125 777      US-A- 4 266 140**

**ELECTRONICS LETTERS, vol. 18, no. 8, April
1982, pages 316-317, London, GB; M.
OIKAWA et al.: "Optical tap array using
distributed-index planar microlens"**

**PATENT ABSTRACTS OF JAPAN, vol. 5, no.
163 (E-78) [835], 20th October 1981; & JP - A -
56 91 482**

(73) Proprietor: **GEC-MARCONI LIMITED
The Grove, Warren Lane
Stanmore, Middlesex HA7 4LY(GB)**

(72) Inventor: **Bennion, Ian
102 Cottingham Drive
Moulton Northampton(GB)**

(74) Representative: **Cockayne, Gillian
The General Electric Company plc Patent
Department GEC Marconi Research Centre
West Hanningfield Road
Great Baddow, Chelmsford Essex CM2
8HN(GB)**

# Description

This invention relates to optical devices and relates more specifically to relatively large-volume low-cost fabrication of optical sensing devices which may be used, for example in hydrophones, for the detection of underwater acoustic waves or in other applications, for the detection, monitoring and/or measurement of such variables as pressure, velocity, acceleration, temperature, displacement etc.

A method of fabricating optical devices has been proposed in which a substrate assembly, comprising a glass sheet having diffused therein an array of planar lenses and having bonded thereto in predetermined accurate positional relationship with the aforesaid planar lenses a multiplicity of optical devices, is divided into a relatively large number of unit parts each of which comprises an optical device with an associated planar lens. The accurate positioning of the optical device relative to their respective planar lenses is achieved according to one method by the formation of metallic bonding pads at relatively precise locations on the substrate surface using photolithographic techniques and by solder-bonding these pads to correspondingly-positioned metallic pads formed at appropriate locations on one surface of the optical devices to be attached to the lens substrate so that they are in correct alignment with the axes of the planar lenses.

The primary objective of the method forming the subject of the aforesaid proposal is the relatively large-volume low-cost precision production of optical devices (e.g. light-emitting-diodes, photo-transistors, photo-diodes etc) having their own individual planar lenses.

The present invention has a similar objective, namely the fabrication of optical devices having individually associated planar lenses but the optical devices concerned are of a form capable of sensing displacement (e.g. oscillation or deflection) of part of the device structure which provides variation of the optical characteristics of the device.

According to the present invention there is provided a method of fabricating optical sensing devices for detecting displacement of a part thereof comprising the steps of bonding a multiplicity of light generative optical devices to one surface of a first relatively large transparent substrate so that the light generative optical devices are accurately located relative to one another and to said first substrate itself, securing resilient spacer support means to the opposite surface of the first substrate and to one surface of a second transparent substrate carrying a multiplicity of light responsive optical devices, said second substrate being substantially parallel to the first one, and dividing the entire assembly into individual unit parts each of which comprises a light generative optical device bonded to one substrate unit and coupled to another substrate unit having its own light responsive optical device by a divided part of the resilient spacer support means so that the two substrate units are resiliently mounted relative to one another whereby relative movement between the two substrate units produces variations in the optical characteristics of the sensing device which can be sensed.

In carrying out the present invention, one or both of the transparent substrates may embody planar lenses produced therein by diffusion or ion-exchange and associated respectively with the optical devices bonded to one of the substrates. Consequently, the position of the optical devices in relation to the optical axes of the diffused planar lenses will need to be accurately predetermined as by the provision of bonding pads on the substrate(s) and optical devices using photo-lithographic techniques.

The optical devices may be light-emitting-diodes, photo-transistors or photo-diodes, for example, or may be terminal ends of optical fibres connected to such devices located remote from the substrate.

The resilient spacer support means may for example, comprise elastomer material (e.g. silicone rubber) moulded into the form of a lattice structure which may be cemented on the opposite sides thereof to the opposed surfaces of the transparent substrates in accurate positional relationship therewith so that openings in the moulded lattice structure are located along the optical axes of the planar lenses diffused into one or both of the aforesaid substrates. The moulded lattice structure may also be so arranged that when the assembly is divided into a multiplicity of unit parts, cross-members of the moulded structure ore divided into blocks positioned so as to support the substrates relative to one another in cantilever fashion.

As on alternative arrangement to the moulded lattice structure of elastomer material, the spacer support means may where increased durability is required comprise a lattice structure of springy metal having a generally similar configuration to the moulded elastomer structure but having channel-shaped cross members, the web parts of which when the assembly is divided into a multiplicity of separate unit parts define spring strip support members which support the substrate units of the individual sensing devices in cantilever fashion relative to one another.

Optical sensing devices of various forms may be fabricated according to the invention without departing from the principles involved. For example, arrays of planar lenses may be diffused into the opposed surfaces of the two substrates with the optical axes of corresponding lenses in the two substrates being accurately aligned with one another. The optical axes of the planar lenses in one of the substrates will be aligned with the active surfaces of the optical devices (e.g. light-emitting-diodes) bonded to the remote surface of the same substrate whereas the optical axes of the planar lenses formed in the other substrate may be accurately aligned with holes formed in the latter substrate, as by etching for receiving the ends of optical fibres, or with the active surfaces other optical devices (e.g. photo- transistors) bonded to the latter substrate.

In another contemplated embodiment of the invention, the substrate to which the optical devices are bonded comprises a plain transparent (e.g. glass) plate and like arrays of planar lenses are diffused into the opposite surfaces of the other substrate with the optical axes of corresponding diffused planar lenses in the respective surfaces being in accurate alignment with one another and with the light-responsive or generative surfaces of the optical devices.

By way of example, a number of embodiments of the present invention will now be described with reference to the accompanying drawings in which:

Figures 1 and 2 are fragmentary cross-sectional and plan views of a diffused planar lens array produced on a glass substrate;

Figure 3 is a view similar to Figure 1 but with the planar lens array substrate having a plurality of optical devices bonded thereto;

Figure 4 is a view similar to Figure 3 in which an optical fibre terminal assembly lens substrate is bonded to the planar lens/optical device array of Figure 3 in spaced relationship therewith by means of an interposed resilient spacer support structure;

Figure 5 shows one of a multiplicity of optical sensing devices divided from the assembly shown in Figure 4;

Figure 6 shows one alternative embodiment to the optical sensing device shown in Figure 5;

Figures 7 and 8 show further alternative embodiments of optical sensing devices produced according to the invention;

Figure 9 shows a perspective view of the resilient spacer support structure included in the array of Figure 4;

Figure 10 shows a perspective view of part of an alternative form of resilient spacer support structure to that shown in Figure 9; and,

Figure 11 shows the optical sensing device of Figure 5 as modified when a resilient spacer support structure of the form shown in Figure 10 is employed.

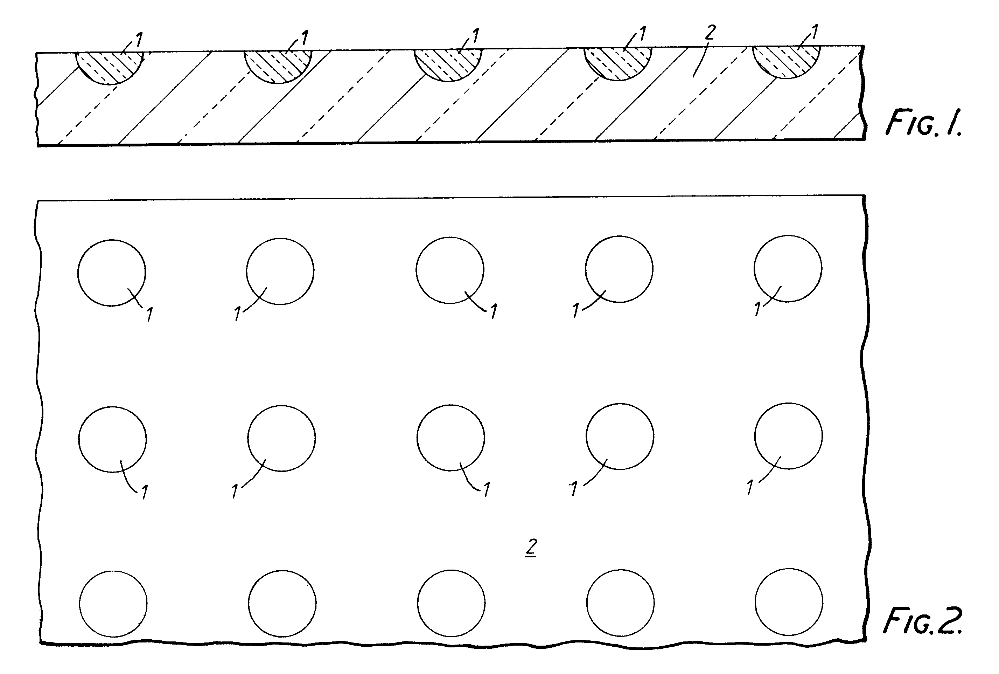

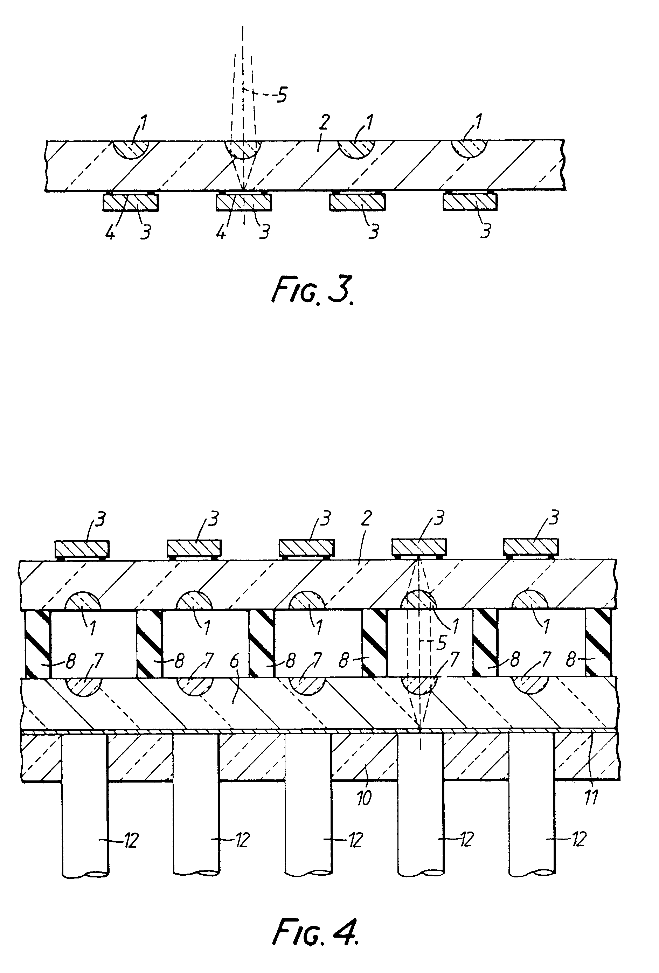

Referring to figures 1 and 2 of the drawings, the array comprises a multiplicity of lenses 1 diffused into one surface of a glass substrate 2. As can be seen in Figure 3, to the surface of the substrate 2 remote from the planar lenses 1 are bonded a multiplicity of optical devices 3 (e.g. light-emitting-diodes, photo-transistors or photo-diodes) associated with the respective lenses. The bonding of these optical devices 3 to the substrate 2 will be such that the light-responsive or generative surfaces 4 of the devices are correctly aligned with the optical axes 5 of the lenses.

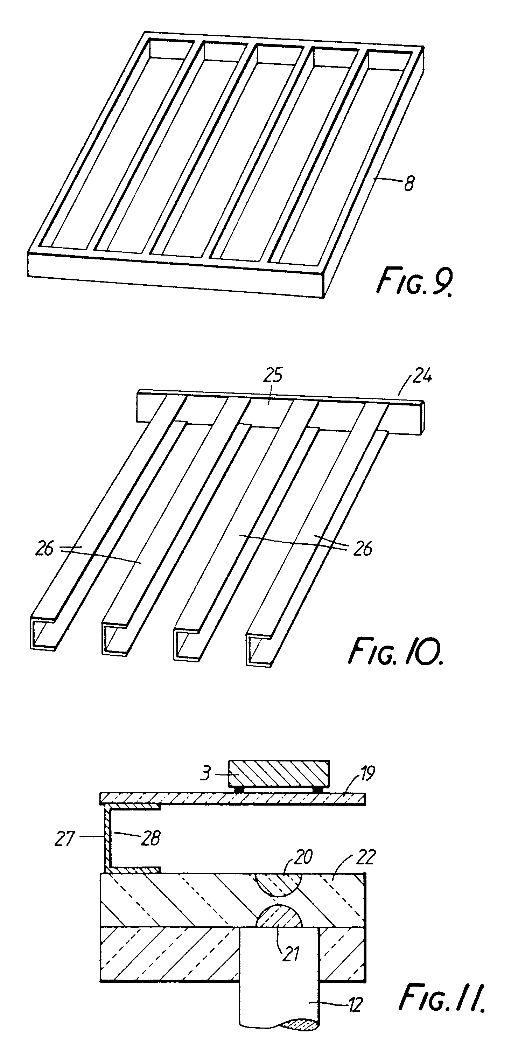

Referring now to Figure 4 of the drawings, it will be seen that a second glass substrate 6 similar to the substrate 2 and embodying an array of diffused planar lenses 7 which may be of equal or different power to lenses 1 is supported in parallel spaced apart relationship with the lens substrate 2 by means of a resilient spacer/support lattice structure 8 of the form shown in perspective in Figure 9. The structure 8 is bonded (e.g. cemented) to the opposed surfaces of the two substrates 2 and 6 so that the planar lenses 1 and 7 of the two substrate lens arrays are in correct optical alignment (i.e. coincident optical axes). The lattice structure 8 may be moulded from silicone rubber or any other suitable elastomer.

The planar lens substrate 6 in the present embodiment has an apertured glass substrate 10 suitably bonded to it with or without the interposition of an anti-reflective coating 11. The substrate 10 has extending therethrough an array of holes which may be produced by etching and which receive the ends of optical fibres 12 (multimode or monomode).

The respective fibres 12 of the array will need to be correctly aligned with the optical axes of the planar lenses and it may here be mentioned that by the utilisation of photo-lithographic techniques in the fabrication of the planar lens and apertured substrates 2, 6 and 10 and in the bonding of the optical devices 3 to the substrate 2 and by the utilisation of precise registration procedures for the various assembly parts relative to one another, an overall high degree of optical precision can readily be achieved during fabrication of the optical devices. More specifically, registration of any one part with any other is readily accomplished at the array stage by means of alignment marks incorporated into all photolithographic masks. Registration of the two completed sub parts to be joined through the elastic member is easily accomplished by utilsing the inbuilt optical parts (i.e. inject light and detect).

The substrate/device assembly shown in Figure 4 may then be divided into individual optical sensing devices of the form shown in Figure 5 by cutting (e.g. sawing) vertically through the lens substrates 2, 6 and 10 and the spacer support structure 8 of the assembly shown in Figure 4 along sets of lines at right angles to one another.

As will readily be apparent from Figure 5, the divided block portion 13 of the resilient spacer support structure 8 serves to support the divided parts 14, 15 and 31 of the planar lens substrates 2 and 6 and apertued substrate 10 (Figure 4) in cantilever fashion. Consequently, if the substrate part 14 were subjected to displacement(s) (e.g. oscillatory) whilst the parts 15 and 31 are restrained against movement the optical characteristics of the device would be varied and such variations can be utilised for the detection, monitoring and/or measurement of such displacement(s). The displacement(s) could be produced by underwater acoustic waves impinging directly on the substrate part 14 when the optical sensing device is embodied in a hydrophone (sonobuoy). Alternatively, some mechanical linkage could be provided between the substrate part 14 and actuating means responsive to variations in temperature, pressure, velocity or acceleration etc.

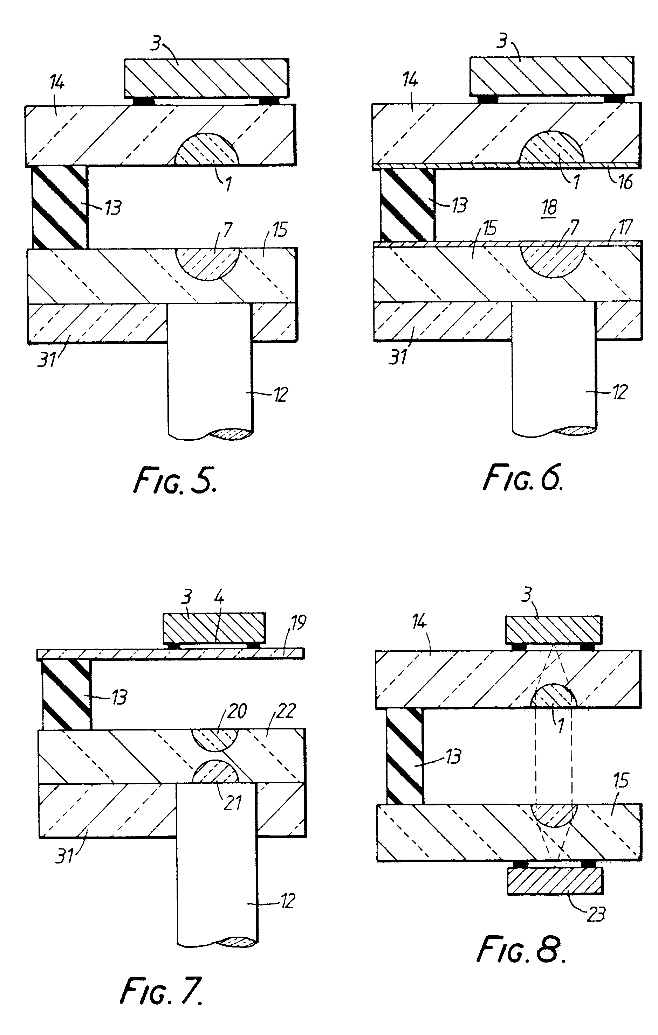

Referring now to Figure 6, this shows an optical sensing device of high sensitivity which can be fabricated in much the same way as the Figure 5 embodiment, but utilising planar lens array substrates having high reflectivity layers 16 and 17 (e.g. metallic or dielectric) and spacing the two parallel lens substrates apart by a specific distance so that the space 18 between the substrate parts 14 and 15 acts as a Fabry-Perot cavity. Any displacement(s) of the substrate part 14 relatively to the part 15, as by the impingement on the part 14 of acoustic waves etc, and the rendering of parts 14 and 15 non-parallel will disrupt the total reflection within the cavity 8 and transmission of light between the optical device 3 and the optical fibre 12 can then occur. Such changes in optical characteristics may be detected by a detector (not shown) at the far end of the optical fibre 12, when the optical device 3 is a light generating device (e.g. light-emitting-diode).

In Figure 7 which shows an alternative embodiment to that depicted in Figure 5, the optical device 3 is bonded to a relatively thin plain glass plate substrate part 19 and the diffused planar lenses 20 and 21 are both formed as shown in the glass substrate part 22 so that the optical axes of the lenses are coincident with one another and correctly aligned with the active surface 4 of the optical device 3 and the optical fibre 12. In this embodiment, displacement(s) of the relatively thin glass substrate part 19, such as due to acoustic waves impinging thereon and facilitated by the elastomer (e.g. silicone rubber) spacer support 13 will produce variations in the optical characteristics of the device and these can be detected by detector means which may be associated with the optical device 3 in the case of the latter being a light responsive device (e.g. photo-transistor or photo-diode) or which may be located at the far end of the optical fibre 12 when the optical device 3 is a light generative device (e.g. light-emitting-diode). Since the substrate part 19 has lower inertia by virtue of its lighter construction the device will have increased sensitivity.

Referring now to Figure 8 of the drawings, this shows a device constructed in accordance with the present invention but incorporating a second optical device 23. This second optical device 23 effectively replaces the optical fibre 12 of the Figure 5 embodiment and light detector or generative means at the far end of the fibre 12 and will comprise a light-responsive device (e.g. photo-transistor or photo-diode) when the optical device 3 is a light-generative device (e.g. light-emitting-diode) and vice versa. By monitoring the output from the light-responsive device, displacement(s) of the substrate part 14 relative to the other part 15 in the vertical direction, as viewed in the Figure, can be detected, monitored and/or measured.

As previously mentioned the elastomer spacer support lattice structure 8 as shown in Figure 9, serves to provide the resilient support blocks 13 (e.g. Figure 8) to facilitate movement of the upper substrate parts of the devices described and illustrated. The lattice structure 8 may be of moulded construction and cemented to the glass substrate 2 and 6 (Figure 4).

An alternative form of lattice spacer support structure which may be employed when increased durability is required is shown in part in Figure 10. This comprises a metal structure 24 having end plates, one of which is shown at 25, to which are secured as by cementing or welding cross members 26 of channel-shape cross section. Springy metal will be used for the cross members to facilitate displacement of the upper substrate part and as can be seen from Figure 11, it is the web 27 of the divided structure part 28 which will flex as the substrate part 14 of the device is deflected.

In all of the optical devices described mechanical and electrical connections between the optical devices 3, 23 and their substrates may be made in a conventional manner, and further electrical components and thick-film circuitry could also be provided on the substrates.

From the foregoing, it will readily be apparent that all of the optical devices described can be fabricated by the multiple device assembly/subsequent cutting process of the present invention which facilitates large volume precision manufacture of such devices at relatively low cost.

**Claims**

1. A method of fabricating optical sensing devices for detecting displacement of a part thereof comprising the steps of bonding a multiplicity of light generative optical devices (3) to one surface of a first relatively large transparent substrate (2) so that the light generative optical devices (3) are accurately located relative to one another and to said first substrate (2) itself, securing resilient spacer support means (8) to the opposite surface of the first substrate (2) and to one surface of a second transparent substrate (6) carrying a multiplicity of light responsive optical devices (12, 23), said second substrate being substantially parallel to the first one and dividing the entire assembly into individual unit parts each of which comprises a light generative optical device (3) bonded to one substrate unit (14, 19) and coupled to another substrate unit (15, 31, 22) having its own light responsive optical device (12, 23) by a divided part (13) of the resilient spacer support means (8) so that the two substrate units (14, 19) (15, 31, 22) are resiliently mounted relative to one another whereby relative movement between the two substrate units produces variations in the optical characteristics of the sensing device which can be sensed.

2. The method as claimed in claim 1, characterised in that one or both of the transparent substrates (2, 6) embody an array of planar lenses (1, 7) produced therein by diffusion or ion-exchange and associated, respectively, with the optical devices (3, 23) bonded to one of the substrates, the positions of the optical devices (3, 23) in relation to the optical axes of the diffused planar lenses (17) being accurately predetermined.

3. The method as claimed in claim 2, characterised in that the positions of the optical devices (3, 23) in relation to the optical axes of the diffused planar lenses (1, 7) are accurately predetermined by the provision of metallic bonding pads on the substrate(s) and optical devices using photolithographic techniques.

4. The method as claimed in any preceding claim, characterised in that the resilient spacer support means (8) comprises elastomer material (e.g. silicone rubber) moulded into the form of a lattice structure (8) which is cemented on the opposite sides thereof to the opposed surfaces of the transparent substrates (2, 6) or otherwise bonded to the substrates (2, 6) in accurate positional relationship therewith so that openings in the moulded lattice structure (9) are located along the optical axes of the planar lenses (1, 7) diffused into one or both of the aforesaid substrates.

5. The method as claimed in claim 4, characterised in that the moulded lattice structure (8) is arranged so that when the assembly is divided into a multiplicity of unit parts, cross-members of the lattice structure are divided into blocks (13) positioned so as to support the substrates relative to one another in cantilever fashion.

6. The method as claimed in any of claims 1 to 3, characterised in that the resilient spacer support means (8) comprises a lattice structure (24) of springy metal having channel-shaped cross members (26), the web parts of which when the assembly is divided into a multiplicity of separate unit parts defining spring strip support members (28) which support the substrate units (19, 22) of the individual sensing devices in cantilever fashion relative to one another.

7. The method as claimed in any preceding claims, characterised in that arrays of planar lenses (1, 7) are diffused into the opposed surfaces of the two substrates (2, 6), with the optical axes of corresponding lenses (1, 7) in the two substrates being accurately aligned with one another, the optical axes of the planar lenses in one of the substrates being aligned with the active surface of the light generative optical devices (3) bonded to the remote surface of the same substrate whereas the optical axes of the planar lenses (7) formed in the other substrate are accurately aligned with holes formed in the latter substrate for receiving the ends of optical fibres (12) or with the active surfaces other light-responsive optical devices (23) bonded to the latter substrate.

8. The method as claimed in claim 1, characterised in that one of that substrates to which the optical devices (3) are bonded comprises a plain transparent plate (19) and like arrays of planar lenses (20, 21) are diffused into the opposite surfaces of the other substrate (22) with the optical axes of the corresponding diffused planar lenses in the respective surfaces being in accurate alignment with one another and the light-responsive or light-generative surfaces (4) of the optical devices (3).

**Revendications**

1. Procédé de fabrication de dispositifs de détection optique destinés à détecter le déplacement d'une de leurs parties, qui comprend les opérations consistant à lier une multiplicité de dispositifs optiques (3) producteurs de lumière à une première surface d'un premier substrat transparent relativement grand (2) de façon que les dispositifs optiques producteurs de lumière (3) soient disposés avec précision les uns par rapport aux autres et par rapport audit premier substrat (2) lui-même, fixer un moyen de support (8) formant une entretoise élastique à la surface opposée du premier substrat (2) et à une première surface d'un deuxième substrat transparent (6) portant une multiplicité de dispositifs optiques (12, 23) sensibles à la lumière, ledit deuxième substrat étant sensiblement parallèle au premier, et diviser tout l'ensemble en parties unitaires distinctes comprenant chacune un dispositif optique producteur de lumière (3) qui est lié à une unité de substrat (14, 19) et est couplé à une autre unité de substrat (15, 31, 22) portant son propre dispositif optique sensible à la lumière (12, 23) par une partie divisée (13) du moyen de support formant une entretoise élastique (8) de façon que les deux unités de substrats (14, 19) (15, 31, 22) soient montées élastiquement l'une par rapport à l'autre si bien qu'un mouvement relatif entre les deux unités de substrat produise des variations des caractéristiques optiques du dispositif de détection qui peuvent être détectées.

2. Procédé selon la revendication 1, caractérisé en ce qu'un des deux substrats transparents ou bien les deux substrats transparents (2, 6) sont matériellement constitués par un réseau de lentilles planes (1, 7) qui y sont produites par diffusion ou échange d' ions et sont respectivement associées aux dispositifs optiques (3, 23) liés à l'un des substrats, les positions des dispositifs optiques (3, 23) par rapport aux axes optiques des lentilles planes diffusées (17) étant prédéterminées avec précision.

3. Procédé selon la revendication 2, caractérisé en ce que les positions des dispositifs optiques (3, 23) par rapport aux axes optiques des lentilles planes diffusées (1, 7) sont prédéterminées avec précision par la réalisation de plots de liaison métalliques sur le ou les substrats et les dispositifs optiques à l'aide de techniques photolithographiques.

4. Procédé selon l'une quelconque des revendications précédentes, caractérisé en ce que le moyen de support formant une entretoise élastique (8) comprend un matériau élastomère (par exemple du caoutchouc silicone) moulé sous la forme d'une structure réticulaire (8) qui est collée par ses faces opposées aux surfaces en regard des substrats transparents (2, 6) ou est liée d'une autre manière aux substrats (2, 6) selon une relation positionnelle précise par rapport à ceux-ci de façon que les ouvertures de la structure réticulaire moulée (8) soient placées suivant les axes optiques des lentilles planes (1, 7) diffusées dans un des substrats susdits ou dans les deux substrats susdits.

5. Procédé selon la revendication 4, caractérisé en ce que la structure réticulaire moulée (8) est conçue de façon que, lorsque l'ensemble est divisé en une multiplicité de parties unitaires, des éléments traversants de la structure réticulaire soient divisés en blocs (13) placés de manière à supporter les substrats l'un par rapport à l'autre en porte à faux.

6. Procédé selon l'une quelconque des revendications 1 à 3, caractérisé en ce que le moyen de support formant une entretoise élastique (8) comprend une structure réticulaire (24) faite d'un métal flexible comportant des éléments traversants (26) en forme de profilés en U, dont les parties âmes définissent, lorsque l'ensemble est divisé en une multiplicité de parties unitaires séparées, des éléments de support formant des bandes flexibles (28) qui supportent les unités de substrat (19, 22) des dispositifs de détection distincts en porte à faux l'une par rapport à l'autre.

7. Procédé selon l'une quelconque des revendications précédentes, caractérisé en ce que des réseaux de lentilles planes (1, 7) sont diffusés dans les surfaces en regard des deux substrats (2, 6), les axes optiques de lentilles correspondantes (1, 7) de substrats étant alignés de manière précise les uns avec les autres, les axes optiques des lentilles planes de l'un des substrats étant alignés avec la surface active des dispositifs optiques producteurs de lumière (3) liés à la surface éloignée de ce même substrat, tandis que les axes optiques des lentilles planes (7) formés dans l'autre substrat sont alignés de manière précise avec des trous formés dans ce dernier substrat afin de recevoir les extrémités de fibres optiques (12) ou avec les surfaces actives d'autres dispositifs optiques sensibles à la lumière (23) qui sont liés à ce dernier substrat.

8. Procédé selon la revendication 1, caractérisé en ce que celui des substrats auquel les dispositifs optiques (3) sont liés comprend une plaque transparente lisse (19), et des réseaux semblables de lentilles planes (20, 21) sont diffusés dans les surfaces opposées de l'autre substrat (22), les axes optiques des lentilles planes diffusées correspondantes des surfaces respectives étant en alignement précis les uns avec les autres et avec les surfaces (4) sensibles à la lumière ou productrices de lumière des dispositifs optiques (3).

**Patentansprüche**

1. Verfahren zur Herstellung optischer Meßvorrichtungen für die Feststellung einer Verschiebung eines Teils davon, welches die Schritte aufweist, daß lichterzeugende optische Vorrichtungen (3) mit einer Oberfläche eines ersten, relativ großen, transparenten Substrats (2) so verbunden werden, daß die lichterzeugenden optischen Vorrichtungen (3) relativ zueinander und zum ersten Substrat (2) selbst genau angeordnet sind, daß ein elastisches Abstandshalter-Stützmittel (8) an der gegenüberliegenden Oberfläche des ersten Substrats (2) und an einer Oberfläche eines zweiten, transparenten Substrats (6) befestigt wird, welches eine Vielzahl lichtempfindlicher optischer Vorrichtungen (12, 23) trägt, wobei das zweite Substrat im wesentlichen parallel zu dem ersten ist, und daß die gesamte Anordnung in einzelne Einheiten zerlegt wird, von denen jede eine lichterzeugende optische Vorrichtung (3) aufweist, die mit einer Substrateinheit (14, 19) verbunden und an eine andere Substrateinheit (15, 31, 22), die ihre eigene, lichtempfindliche optische Vorrichtung (12, 23) besitzt, durch ein Trennstück (13) des elastischen Abstandshalter-Stützmittels (8) so gekoppelt ist, daß die zwei Substrateinheiten (14, 19) (15, 31, 22) relativ zueinander elastisch montiert sind, wodurch eine relative Bewegung zwischen den beiden Substrateinheiten Veränderungen in den optischen Charakteristiken der Meßvorrichtung erzeugt, die gemessen werden können.

2. Verfahren nach Anspruch 1, dadurch gekennzeichnet, daß eines der transparenten Substrate (2, 6) oder beide eine Anordnung von Planarlinsen (1, 7) enthält (oder enthalten), die darin durch Diffusion oder Ionenaustausch erzeugt werden und jeweils den optischen Vorrichtungen (3, 23), die mit einem der Substrate verbunden sind, zugeordnet sind, wobei die Positionen der optischen Vorrichtungen (3, 23) in Bezug auf die optischen Achsen der eindiffundierten Planarlinsen (1, 7) genau vorher bestimmt sind.

3. Verfahren nach Anspruch 2, dadurch gekennzeichnet, daß die Positionen dei optischen Vorrichtungen (3, 23) in Bezug auf die optischen Achsen der eindiffundierten Planarlinsen (1, 7) genau vorher bestimmt sind durch Anbringung metallischer Kontaktierflächen an das (die) Substrat(e) und optischer Vorrichtungen unter Verwendung photolithographischer Techniken.

4. Verfahren nach einem der vorhergehenden Ansprüche, dadurch gekennzeichnet, daß das elastische Abstandshalter-Stützmittel (8) ein elastomeres Material (z.B. Silikonkautschuk) aufweist, welches in der Gestalt einer Gitterstruktur (8) geformt ist, die an den entgegengesetzten Seiten davon an die gegenüberliegenden Oberflächen der transparenten Substrate (2, 6) angekittet ist oder in anderer Weise mit den Substraten (2, 6) in genauer Lagebeziehung damit so verbunden ist, daß Öffnungen der geformten Gitterstruktur (8) entlang deroptischen Achsen der Planarlinsen (1, 7), die in eines oder in beide der obenerwähnten Substrate eindiffundiert sind, gelegen sind.

5. Verfahren nach Anspruch 4, dadurch gekennzeichnet, daß die geformte Gitterstruktur (8) so angeordnet ist, daß, falls die Anordnung in eine Vielzahl von Einheiten geteilt wird, Querglieder der Gitterstruktur in Blöcke (13) geteilt werden, die so angebracht sind, daß sie die Substrate relativ zueinander freitragend stützen.

6. Verfahren nach einem der Ansprüche 1 bis 3, dadurch gekennzeichnet, daß das elastische Abstandshalter-Stützmittel (8) eine Gitterstruktur (24) eines federnden Metalls aufweist, welche rinnenförmige Querglieder (26) besitzt, deren Bahnteile, falls die Anordnung in eine Vielzahl von getrennten Einheiten geteilt wird, die Federstreifen-Stützglieder (28) definieren, welche die Substrateinheiten (19, 22) der einzelnen Meßvorrichtungen relativ zueinander freitragend stützen.

7. Verfahren nach einem der vorhergehenden Ansprüche, dadurch gekennzeichnet, daß Anordnungen von Planarlinsen (1,7) in die gegenüberliegenden Oberflächen der zwei Substrate (2, 6) eindiffundiert sind, wobei die optischen Achsen der entsprechenden Linsen (1, 7) in den zwei Substraten genau miteinander ausgerichtet sind, wobei die optischen Achsen der Planarlinsen in einem der Substrate mit der aktiven Oberfläche der lichterzeugenden optischen Vorrichtungen (3), die mit der abgewandten Oberfläche des gleichen Substrats verbunden sind, ausgerichtet sind, wohingegen die optischen Achsen der Planarlinsen (7), die in dem anderen Substrat geformt sind, genau mit Löchern, die in dem letztgenannten Substrat geformt sind, um die Enden von optischen Fasern (12) aufzunehmen, oder mit den aktiven Oberflächen anderer, lichtempfindlicher optischer Vorrichtungen (23) die mit dem letztgenannten Substrat verbunden sind, ausgerichtet sind.

8. Verfahren nach Anspruch 1, dadurch gekennzeichnet, daß eines der Substrate, mit dem die optischen Vorrichtungen (3) verbunden sind, eine einfache, transparente Platte (19) aufweist, und daß gleichartige Anordnungen von Planarlinsen (20, 21) in die gegenüberliegenden Oberflächen des anderen Substrats (22) eindiffundiert sind, wobei die optischen Achsen der entsprechenden eindiffundierten Planarlinsen in den jeweiligen Oberflächen genau miteinander und den lichtempfindlichen oder lichterzeugenden Oberflächen (4) der optischen Vorrichtungen (3) ausgerichtet sind.

*Fig. 1.*

*Fig. 2.*

EP 0 211 120 B1

FIG. 3.

FIG. 4.

FIG. 5.

FIG. 6.

FIG. 7.

FIG. 8.

FIG. 9.

FIG. 10.

FIG. 11.